# EUROPEAN PATENT APPLICATION

(11) **EP 4 282 699 A1**
(43) Date of publication of application: **29.11.2023**
(21) Application number: 21941067.7
(22) Date of filing: 08.05.2021
(51) Int. Cl.: B60N 2/02, B60N 2/12

(54) **ADJUSTMENT METHOD FOR VEHICLE ELECTRIC SEAT, AND DEVICE, SYSTEM AND VEHICLE**

(71) Applicant: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: BIRAJDAR, Mahadev Vishwanath, Hangzhou Bay New Zone Ningbo, Zhejiang 315336 (CN); ZHOU, Qian, Hangzhou Bay New Zone Ningbo, Zhejiang 315336 (CN); LIAO, Pingwei, Hangzhou Bay New Zone Ningbo, Zhejiang 315336 (CN); LI, Tianqi, Hangzhou Bay New Zone Ningbo, Zhejiang 315336 (CN)
(74) Representative: Range, Christopher William
(86) International application number: PCT/CN2021/092428
(87) International publication number: WO 2022/236486

(57) **Abstract**

Provided are a vehicle electric seat (10) adjustment method, apparatus, and system, and a vehicle. The method includes: obtaining, in response to a position adjustment instruction for an electric seat (10), an image of a seat at a direct rear side of the electric seat (10) that is currently captured by a camera system (12) disposed on the electric seat (10); analyzing, based on the image, whether the seat at the direct rear side is occupied by a passenger; when the seat at the direct rear side is occupied by the passenger, calculating, based on the image, a current distance of the electric seat (10) relative to the passenger on the seat at the direct rear side of the electric seat (10), and obtaining a predetermined seat adjustment safety distance; calculating a position adjustment parameter of the electric seat (10) based on the seat adjustment safety distance and the current distance; and adjusting a position of the electric seat (10) based on the position adjustment parameter, to adjust the electric seat (10) to a target position.

## Description

### FIELD

The present disclosure relates to the field of vehicle technologies, and more particularly, to a vehicle electric seat adjustment method, apparatus, and system, and a vehicle.

### BACKGROUND

To meet ride needs of passengers, an electric seat having an adjustable seat position (which may be a horizontal position, a backrest position, a legrest position, or the like of the seat) is mounted in an existing vehicle. A position adjustment method for the electric seat of the existing vehicle is generally as follows. When a passenger needs to adjust a position of a corresponding electric seat, the passenger presses a position adjustment switch corresponding to the electric seat to generate an adjustment instruction. A seat adjustment system controls, based on a received control instruction, a motor corresponding to the electric seat to operate, to adjust the electric seat to a target position. A current position parameter of the existing electric seat is generally obtained based on a Hall sensor disposed in an adjustment motor of the electric seat. When the electric seat is adjusted to the target position, a parameter of the target position of the electric seat is obtained based on the current position parameter of the electric seat and a position adjustment parameter corresponding to the control instruction.

During an implementation of the present disclosure, it was found that the following technical problem exists in the related art. In the conventional position adjustment method for the electric seat, the electric seat is only mechanically adjusted to the set target position based on the adjustment instruction. When a passenger sits on the electric seat, adjusting the electric seat to the target position affects the comfort of or even hits a passenger on a seat at a direct rear side of the electric seat.

### SUMMARY

Embodiments of the present disclosure provide a vehicle electric seat adjustment method, apparatus, and system, and a vehicle, capable of avoiding an impact on ride comfort and ride safety of a passenger on a seat at a direct rear side of an electric seat during the adjustment of a position of the electric seat.

According to an embodiment of the present disclosure, a vehicle electric seat adjustment system is provided. The system includes: at least one electric seat; at least one seat position adjustment system corresponding to the at least one electric seat in one-to-one correspondence and configured to adjust a position of the corresponding electric seat; a camera system disposed on the electric seat and configured to photograph a seat at a direct rear side of the electric seat; and a seat adjustment controller connected to the camera system and the seat position adjustment system and configured to: obtain, in response to a position adjustment instruction for the electric seat, an image of the seat at the direct rear side that is currently captured by the camera system; analyze the image to determine whether the seat at the direct rear side is occupied by a passenger; when the seat at the direct rear side is occupied by the passenger, calculate, based on the image, a current distance of the electric seat relative to the passenger on the seat at the direct rear side of the electric seat, and obtain a predetermined seat adjustment safety distance; calculate a position adjustment parameter of the electric seat based on the seat adjustment safety distance and the current distance; and adjust the position of the electric seat based on the position adjustment parameter to adjust the electric seat to a target position.

As an improvement to the above solutions, the seat adjustment controller is further configured to: when the seat at the direct rear side is occupied by no passenger, calculate, based on the image, a current distance of the electric seat relative to the seat at the direct rear side of the electric seat, and obtain the predetermined seat adjustment safety distance.

As an improvement to the above solutions, the seat position adjustment system includes a seat back adjustment motor and a seat front-rear movement adjustment motor; and the position adjustment parameter includes a seat back rotation angle and a seat front-rear movement distance.

As an improvement to the above solutions, the camera system includes two cameras arranged from top to bottom on a back of the electric seat.

As an improvement to the above solutions, the camera is a depth camera.

As an improvement to the above solutions, the vehicle electric seat adjustment system further includes a seat adjustment button connected to the seat adjustment controller. The seat adjustment button is configured to transmit, in response to being operated by a user, the position adjustment instruction for the electric seat to the seat adjustment controller.

As an improvement to the above solutions, the seat adjustment controller is further configured to: transmit, in response to a completion of the adjustment of the electric seat, an adjustment success message to an on-vehicle display screen of a vehicle, and control the on-vehicle display screen to display the adjustment success message.

As an improvement to the above solutions, the position adjustment instruction is issued by the vehicle when the user unlocks the vehicle.

According to another embodiment of the present disclosure, a vehicle is provided.

According to another embodiment of the present disclosure, a vehicle electric seat adjustment method is provided correspondingly. The method includes: obtaining, in response to a position adjustment instruction for an electric seat, an image of a seat at a direct rear side of the electric seat that is currently captured by a camera system disposed on the electric seat; analyzing the image to determine whether the seat at the direct rear side is occupied by a passenger; when the seat at the direct rear side is occupied by the passenger, calculating, based on the image, a current distance of the electric seat relative to the passenger on the seat at the direct rear side of the electric seat, and obtaining a predetermined seat adjustment safety distance; calculating a position adjustment parameter of the electric seat based on the seat adjustment safety distance and the current distance; and adjusting a position of the electric seat based on the position adjustment parameter, to adjust the electric seat to a target position.

According to another embodiment of the present disclosure, a vehicle electric seat adjustment apparatus is provided. The apparatus includes a processor, a memory, and a computer program stored in the memory and configured to be executed by the processor. The processor, when executing the computer program, implements the vehicle electric seat adjustment method according to the above embodiments of the present disclosure.

Compared with the related art, an embodiment of the above embodiments can provide the following advantages. With the camera system disposed on the electric seat, when the position of the electric seat needs to be adjusted, the image of the seat at the direct rear side that is currently captured by the camera system is obtained in response to the position adjustment instruction for the electric seat. The image is analyzed to determine whether the seat at the direct rear side is occupied by the passenger. When the seat at the direct rear side is occupied by the passenger, the current distance of the electric seat relative to the passenger on the seat at the direct rear side of the electric seat is calculated based on the image, and the predetermined seat adjustment safety distance is obtained. The position adjustment parameter of the electric seat is calculated based on the seat adjustment safety distance and the current distance. The position of the electric seat is adjusted based on the position adjustment parameter to adjust the electric seat to the target position. In this way, after the electric seat is adjusted to the target position, the electric seat maintains a distance (i.e., the seat adjustment safety distance) from the passenger on the seat at the direct rear side, which can prevent the electric seat from hitting the passenger on the seat at the direct rear side and avoid the impact on the ride comfort of the passenger on the seat at the direct rear side. The above analysis reveals that, according to the embodiments of the present disclosure, the impact on the ride comfort and the ride safety of the passenger on the seat at the direct rear side of the electric seat can be avoided during the adjustment of the position of the electric seat.

### BRIEF DESCRIPTION OF THE DRAWINGS

FIG. 1 is a schematic structural diagram of a vehicle electric seat adjustment system according to an embodiment of the present disclosure.
FIG. 2 illustrates a schematic diagram of a photographing state of a camera system during an adjustment of a position of a vehicle electric seat.
FIG. 3 is a flowchart illustrating a vehicle electric seat adjustment method according to an embodiment of the present disclosure.
FIG. 4 is a schematic structural diagram of a vehicle electric seat adjustment apparatus according to an embodiment of the present disclosure.

Reference numerals of the accompanying drawings: 10, electric seat; 11, seat position adjustment system; 12, camera system; 120, camera; 13, seat adjustment controller; 14, seat adjustment button; 15, on-vehicle display screen.

### DETAILED DESCRIPTION

Technical solutions according to embodiments of the present disclosure will be described clearly and completely below in combination with accompanying drawings of the embodiments of the present disclosure. The embodiments described below are only a part of the embodiments of the present disclosure, rather than all embodiments of the present disclosure. On a basis of the embodiments of the present disclosure, all other embodiments obtained by those skilled in the art without inventive labor shall fall within the protection scope of the present disclosure.

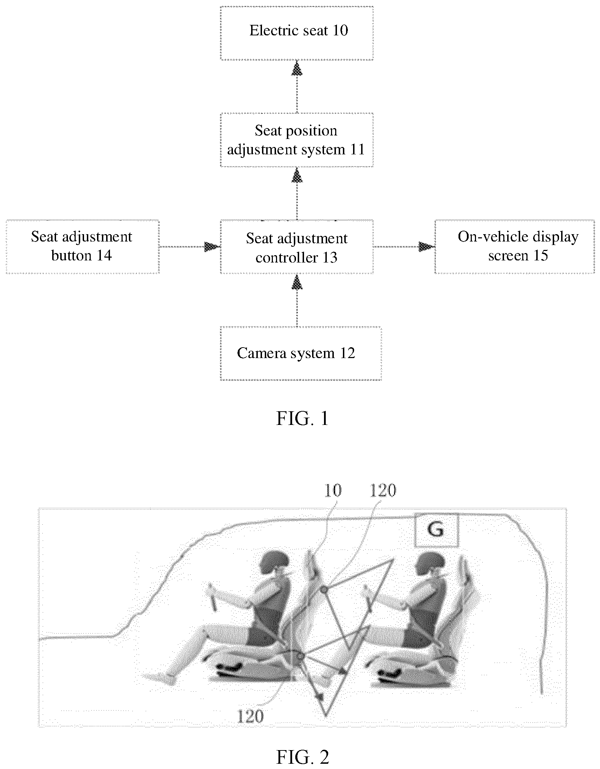

FIG. 1 is a schematic structural diagram of a vehicle electric seat 10 adjustment system according to an embodiment of the present disclosure. As illustrated in FIG. 1, the system includes at least one electric seat 10, at least one seat position adjustment system 11 corresponding to the at least one electric seat 10 in one-to-one correspondence, a camera system 12, and a seat adjustment controller 13. The seat position adjustment system 11 is configured to adjust a position of the corresponding electric seat 10. The camera system 12 is disposed on the electric seat 10 and configured to photograph a seat at a direct rear side of the electric seat 10. The seat adjustment controller 13 is connected to the camera system 12 and the seat position adjustment system 11 and configured to: obtain, in response to a position adjustment instruction for the electric seat 10, an image of the seat at the direct rear side that is currently captured by the camera system 12; determine whether the seat at the direct rear side is occupied by a passenger based on the image; when the seat at the direct rear side is occupied by the passenger, calculate, based on the image, a current distance of the electric seat 10 relative to the passenger on the seat at the direct rear side of the electric seat 10, and obtain a predetermined seat adjustment safety distance; calculate a position adjustment parameter of the electric seat 10 based on the seat adjustment safety distance and the current distance; and adjust the position of the electric seat 10 based on the position adjustment parameter to adjust the electric seat 10 to a target position.

In some embodiments, the seat controller is configured to obtain, in response to receiving the position adjustment instruction for the electric seat 10, the image of the seat at the direct rear side that is currently captured by the camera system 12. The seat controller is configured to analyze the image and identify whether the seat at the direct rear side is occupied by a passenger. In some embodiments, the seat controller is configured to analyze and recognize the image based on a conventional image recognition algorithm. For example, a neural network model for image recognition of a passenger on a seat may be pre-trained, and used to recognize the image captured by the camera system 12 to determine whether a seat is occupied by a passenger.

In the embodiment, further, the seat adjustment controller 13 is further configured to: when the seat at the direct rear side is occupied by no passenger, calculate, based on the image, a current distance of the electric seat 10 relative to the seat at the direct rear side of the electric seat 10, and obtain the predetermined seat adjustment safety distance.

In the embodiment, for example, a calculation of the current distance may be performed on the image based on a conventional ranging algorithm of a camera 120.

In some embodiments, the predetermined seat adjustment safety distance is preset, and used to ensure that the electric seat 10 has a safety distance away from the passenger on the seat at the direct rear side or to ensure that the electric seat 10 has a safety distance away from the seat at the direct rear side. When the electric seat 10 is adjusted to the target position, the electric seat 10 has a safety distance (i.e., the seat adjustment safety distance) away from the passenger on the seat at the direct rear side.

In the embodiment, for example, on a basis of the seat adjustment safety distance and the current distance, a distance to be adjusted for the seat may be obtained as: distance to be adjusted = current distance - seat adjustment safety distance. The position adjustment parameter of the electric seat 10 is calculated based on the calculated distance to be adjusted for the seat. A position adjustment of the electric seat 10 by the seat position adjustment system 11 is controlled based on the position adjustment parameter. For example, when the seat position adjustment system 11 includes a seat front-rear movement motor, and the distance to be adjusted for the electric seat 10 is 10 cm, the position adjustment parameter may be a rotation angle of the seat front-rear movement motor of the electric seat 10 accordingly. A correspondence between unit rotation angles of the movement motor and distances of the horizontal movement of the electric seat 10 is preset.

In summary, according to the embodiments of the present disclosure, with the camera system 12 disposed on the electric seat 10, when the position of the electric seat 10 needs to be adjusted, the image of the seat at the direct rear side that is currently captured by the camera system 12 is obtained in response to the position adjustment instruction for the electric seat 10. The image is analyzed to determine whether the seat at the direct rear side is occupied by the passenger. When the seat at the direct rear side is occupied by the passenger, the current distance of the electric seat 10 relative to the passenger on the seat at the direct rear side of the electric seat 10 is calculated based on the image, and the predetermined seat adjustment safety distance is obtained. The position adjustment parameter of the electric seat 10 is calculated based on the seat adjustment safety distance and the current distance. The position of the electric seat 10 is adjusted based on the position adjustment parameter to adjust the electric seat 10 to the target position. In this way, after the electric seat 10 is adjusted to the target position, the electric seat 10 maintains a distance (i.e., the seat adjustment safety distance) from the passenger on the seat at the direct rear side, which can prevent the electric seat 10 from hitting the passenger on the seat at the direct rear side and avoid an impact on ride comfort of the passenger on the seat at the direct rear side. The above analysis reveals that, according to the embodiments of the present disclosure, the impact on the ride comfort and ride safety of the passenger on the seat at the direct rear side of the electric seat 10 can be avoided during the adjustment of the position of the electric seat 10.

For example, the seat position adjustment system 11 includes a seat back adjustment motor and a seat front-rear movement adjustment motor, and the position adjustment parameter includes a seat back rotation angle and a seat front-rear movement distance.

In the embodiment, as an example, the seat adjustment safety distance is 10 mm, the seat front-rear movement distance=L1-10mm, and the seat back rotation angle R=(L1-10mm)Deg, where Deg represents an angle conversion unit, and L1 represents the current distance.

In the embodiment, as an example, when the seat adjustment safety distance and the current distance are obtained, the corresponding seat back rotation angle and seat front-rear movement distance may be found in a locally preset mapping table in accordance with a table look-up method. The mapping table stores a correspondence between different current distances and different seat back rotation angles and seat front-rear movement distances.

In the above embodiments, for example, as illustrated in FIG. 2, the camera system 12 includes two cameras 120 arranged from top to bottom on a back of the electric seat 10. As an example, the camera 120 is a depth camera 120.

In the above embodiments, further, the vehicle electric seat 10 adjustment system further includes a seat adjustment button 14 connected to the seat adjustment controller 13. The seat adjustment button 14 is configured to transmit, in response to being operated by a user, the position adjustment instruction for the electric seat 10 to the seat adjustment controller 13.

As an example, the position adjustment instruction may be issued by the vehicle when the user unlocks the vehicle.

As an improvement to the above embodiments, the seat adjustment controller 13 is further configured to: transmit, in response to a completion of the adjustment of the electric seat 10, an adjustment success message to an on-vehicle display screen 15 of a vehicle, and control the on-vehicle display screen 15 to display the adjustment success message. In some embodiments, a green-light message representing that the position of the electric seat 10 has been successfully adjusted may be displayed on the on-vehicle display screen 15.

According to another embodiment of the present disclosure, a vehicle is provided. The vehicle includes the vehicle electric seat adjustment system according to any of the above embodiments.

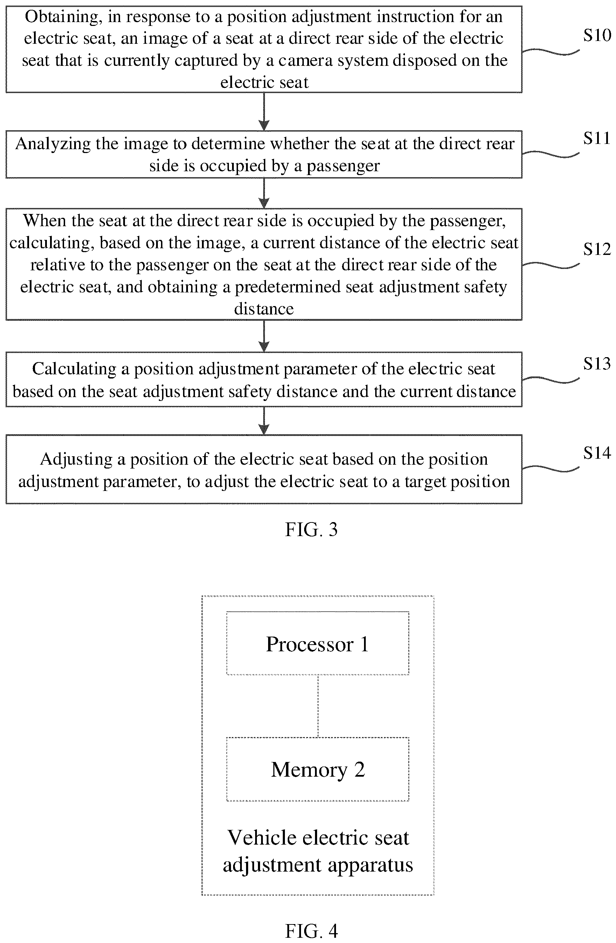

FIG. 3 is a flowchart illustrating a vehicle electric seat adjustment method according to an embodiment of the present disclosure. As illustrated in FIG. 3, the vehicle electric seat adjustment method includes operations at blocks.

At S10, in response to a position adjustment instruction for an electric seat, an image of a seat at a direct rear side of the electric seat that is currently captured by a camera system disposed on the electric seat is obtained.

At S 11, the image is analyzed to determine whether the seat at the direct rear side is occupied by a passenger.

At S12, when the seat at the direct rear side is occupied by the passenger, a current distance of the electric seat relative to the passenger on the seat at the direct rear side of the electric seat is calculated based on the image, and a predetermined seat adjustment safety distance is obtained.

At S13, a position adjustment parameter of the electric seat is calculated based on the seat adjustment safety distance and the current distance.

At S14, a position of the electric seat is adjusted based on the position adjustment parameter, to adjust the electric seat to a target position.

In the embodiments of the present disclosure, with the camera system disposed on the electric seat, when the position of the electric seat needs to be adjusted, the image of the seat at the direct rear side that is currently captured by the camera system is obtained in response to the position adjustment instruction for the electric seat. The image is analyzed to determine whether the seat at the direct rear side is occupied by the passenger. When the seat at the direct rear side is occupied by the passenger, the current distance of the electric seat relative to the passenger on the seat at the direct rear side of the electric seat is calculated based on the image, and the predetermined seat adjustment safety distance is obtained. The position adjustment parameter of the electric seat is calculated based on the seat adjustment safety distance and the current distance. The position of the electric seat is adjusted based on the position adjustment parameter to adjust the electric seat to the target position. In this way, after the electric seat is adjusted to the target position, the electric seat maintains a distance (i.e., the seat adjustment safety distance) from the passenger on the seat at the direct rear side, which can prevent the electric seat from hitting the passenger on the seat at the direct rear side and avoid the impact on the ride comfort of the passenger on the seat at the direct rear side. The above analysis reveals that, according to the embodiments of the present disclosure, the impact on the ride comfort and the ride safety of the passenger on the seat at the direct rear side of the electric seat can be avoided during the adjustment of the position of the electric seat.

Further, the method further includes, subsequent to the operation at block S11 and prior to the operation at block S13: when the seat at the direct rear side is occupied by no passenger, calculating, based on the image, a current distance of the electric seat relative to the seat at the direct rear side of the electric seat, and obtaining the predetermined seat adjustment safety distance.

In the embodiment, the current distance of the electric seat relative to the seat at the direct rear side of the electric seat is calculated based on the image. The position adjustment parameter of the electric seat may be calculated based on the current distance and the predetermined seat adjustment safety distance. Therefore, when the electric seat is adjusted to the target position, the electric seat can be at the safety distance (i.e., the seat adjustment safety distance) away from the seat at the direct rear side of the electric seat.

It should be noted that, reference to the above method embodiments can be made to relevant contents of the above-mentioned system embodiments, and details thereof will be omitted herein.

FIG. 4 is a schematic diagram of a vehicle electric seat adjustment apparatus according to an embodiment of the present disclosure. As illustrated in FIG. 4, the vehicle electric seat adjustment apparatus according to the embodiment includes a processor 1, a memory 2, and a computer program stored in the memory 2 and executable on the processor 1, e.g., a vehicle electric seat adjustment program. The processor 1, when executing the computer program, implements the steps in each of the above-mentioned vehicle electric seat adjustment method embodiments. Or, the processor 1, when executing the computer program, implements functions of each module/unit in each of the above-mentioned apparatus embodiments.

As an example, the computer program may be divided into one or more modules/units, and the one or more modules/units are stored in the memory and executed by the processor to complete the present disclosure. The one or more modules/units may be a series of computer program instruction segments capable of performing a specific function. The instruction segments are used to describe the execution of the computer program in the vehicle electric seat adjustment apparatus.

The vehicle electric seat adjustment apparatus may be the seat adjustment controller, a domain controller, or the like of the vehicle. The vehicle electric seat adjustment apparatus may include, but is not limited to, a processor and a memory. It is conceivable for those skilled in the art that, the schematic diagram is merely an example of the vehicle electric seat adjustment apparatus and does not constitute a limitation on the vehicle electric seat adjustment apparatus. The vehicle electric seat adjustment apparatus may include more or fewer members than those illustrated in the figure, or combine certain members, or have a different arrangement of members.

The processor may be a Central Processing Unit (CPU), a general-purpose processor, a Digital Signal Processor (DSP), an Application Specific Integrated Circuit (ASIC), a Field-Programmable Gate Array (FPGA) or other programmable logic devices, a discrete gate or a transistor logic device, a discrete hardware component, etc. The general-purpose processor may be a microprocessor, or the processor may also be any conventional processor, etc. The processor, which is a control center of the vehicle electric seat adjustment apparatus, connects respective members of the entire vehicle electric seat adjustment apparatus using various interfaces and lines.

The memory may store a computer program and/or module. The processor implements various functions of the vehicle electric seat adjustment apparatus by running or executing the computer program and/or module stored in the memory and by invoking data stored in the memory. The memory may primarily include a program storage region and a data storage region. The program storage region can be used to store an operating system, an application required for at least one function (e.g., a sound play function, an image play function, etc.), etc. The data storage region can be used to store data created based on a use of a cell phone (e.g., audio data, phone book, etc.), etc. In addition, the memory may include a cache random access memory, and include a non-volatile memory, such as a hard disk, a memory, a plug-in hard disk, a Smart Media Card (SMC), a Secure Digital (SD) card, a flash card, at least one disk memory device, a flash memory device, or other volatile solid-state memory devices.

If the modules/units integrated in the vehicle electric seat adjustment apparatus are realized in a form of functional software units and are sold or used as independent products, the integrated modules/units can be stored in a computer-readable storage medium. Based on this understanding, the present disclosure implements all or part of the processes in the above method embodiments, and can also be completed by a computer program instructing relevant hardware. The computer program can be stored in a computer-readable storage medium. When the computer program is executed by the processor, steps of the above method embodiments may be implemented. The computer program may include computer program codes. The computer program codes may be in a form of source codes, object codes, an executable file, or some intermediate forms, etc. The computer-readable medium may include any entity or apparatus capable of carrying the computer program codes, a recording medium, a USB disk, a mobile hard disk, a magnetic disk, an optical disk, a computer memory, a Read-Only Memory (ROM), a Random Access Memory (RAM), an electric carrier signal, a telecommunications signal, and a software distribution medium, etc. It should be noted that content contained in the computer-readable medium can be appropriately added or deleted in accordance with requirements of legislation and patent practices in the jurisdiction. For example, in some jurisdictions, according to the legislation and patent practices, the computer-readable medium does not include electrical carrier signals and telecommunication signals.

It should be noted that the above-described apparatus embodiments are merely schematic. The units illustrated as separate components may be or not be separated physically, and components shown as units may be or not be physical modules, i.e., may be located at one position, or distributed onto multiple network units. It is possible to select some or all of the modules according to actual needs, for achieving the objective of solutions of embodiments of the present disclosure. In addition, a connection relationship between the modules in the accompanying drawing of the apparatus embodiments provided by the present disclosure indicates a communication connection between the modules, which may be implemented specifically as one or more communication buses or signal lines. Those skilled in the art can understand and implement the communication connection without inventive labor.

While some embodiments of the present disclosure are described above, it should be noted that, various improvements and modifications can be made by those skilled in the art without departing from the principle of the present disclosure. These improvements and modifications are to be encompassed by the protect scope of present disclosure.

## Claims

1. A vehicle electric seat adjustment system, comprising:
at least one electric seat;
at least one seat position adjustment system corresponding to the at least one electric seat in one-to-one correspondence and configured to adjust a position of the corresponding electric seat;
a camera system disposed on the electric seat and configured to photograph a seat at a direct rear side of the electric seat; and
a seat adjustment controller connected to the camera system and the seat position adjustment system and configured to:
obtain, in response to a position adjustment instruction for the electric seat, an image of the seat at the direct rear side that is currently captured by the camera system;
analyze the image to determine whether the seat at the direct rear side is occupied by a passenger;
when the seat at the direct rear side is occupied by the passenger, calculate, based on the image, a current distance of the electric seat relative to the passenger on the seat at the direct rear side of the electric seat, and obtain a predetermined seat adjustment safety distance;
calculate a position adjustment parameter of the electric seat based on the seat adjustment safety distance and the current distance; and
adjust the position of the electric seat based on the position adjustment parameter to adjust the electric seat to a target position.

2. The vehicle electric seat adjustment system according to claim 1, wherein the seat adjustment controller is further configured to:
when the seat at the direct rear side is occupied by no passenger, calculate, based on the image, a current distance of the electric seat relative to the seat at the direct rear side of the electric seat, and obtain the predetermined seat adjustment safety distance.

3. The vehicle electric seat adjustment system according to claim 1, wherein:
the seat position adjustment system comprises a seat back adjustment motor and a seat front-rear movement adjustment motor; and
the position adjustment parameter comprises a seat back rotation angle and a seat front-rear movement distance.

4. The vehicle electric seat adjustment system according to claim 3, wherein the camera system comprises two cameras arranged from top to bottom on a back of the electric seat.

5. The vehicle electric seat adjustment system according to claim 4, wherein the camera is a depth camera.

6. The vehicle electric seat adjustment system according to claim 1, further comprising a seat adjustment button connected to the seat adjustment controller, the seat adjustment button being configured to transmit, in response to being operated by a user, the position adjustment instruction for the electric seat to the seat adjustment controller.

7. The vehicle electric seat adjustment system according to claim 1, wherein the seat adjustment controller is further configured to:
transmit, in response to a completion of the adjustment of the electric seat, an adjustment success message to an on-vehicle display screen of a vehicle, and control the on-vehicle display screen to display the adjustment success message.

8. A vehicle, comprising the vehicle electric seat adjustment system according to any one of claims 1 to 7.

9. A vehicle electric seat adjustment method, comprising:
obtaining, in response to a position adjustment instruction for an electric seat, an image of a seat at a direct rear side of the electric seat that is currently captured by a camera system disposed on the electric seat;
analyzing the image to determine whether the seat at the direct rear side is occupied by a passenger;
when the seat at the direct rear side is occupied by the passenger, calculating, based on the image, a current distance of the electric seat relative to the passenger on the seat at the direct rear side of the electric seat, and obtaining a predetermined seat adjustment safety distance;
calculating a position adjustment parameter of the electric seat based on the seat adjustment safety distance and the current distance; and
adjusting a position of the electric seat based on the position adjustment parameter, to adjust the electric seat to a target position.

10. A vehicle electric seat adjustment apparatus, comprising a processor, a memory, and a computer program stored in the memory and configured to be executed by the processor, wherein the processor, when executing the computer program, implements the vehicle electric seat adjustment method according to claim 9.
